# EUROPEAN PATENT SPECIFICATION

(11) **EP 3 720 619 B1**
(45) Date of publication and mention of the grant of the patent: **22.04.2026**
(21) Application number: 18885988.8
(22) Date of filing: 07.12.2018
(51) Int. Cl.: B08B 9/023, F16L 55/18, F16L 1/26, F16L 1/16, B24B 29/00, B63C 11/40, B23K 37/02, B24C 1/08, B26F 1/00, B26F 1/38, E21B 17/01, E21B 29/06, F16L 11/12, G01N 29/22, G01N 29/265

(54) **FLEXIBLE RISER INSULATION REMOVAL TOOL FOR ULTRASONIC TEST INSPECTION**
FLEXIBLES STEIGROHRABISOLIERWERKZEUG FÜR EINE ULTRASCHALLPRÜFUNG
OUTIL DE RETRAIT D'ISOLATION DE COLONNE MONTANTE FLEXIBLE POUR INSPECTION PAR TEST ULTRASONORE

(30) Priority: 09.12.2017 US 201762596808 P
(43) Date of publication of application: 14.10.2020
(73) Proprietor: Oceaneering International, Inc., Houston, TX 77086 (US)
(72) Inventor: SCOVILLE, Daniel, J, The Woodlands Texas 77433 (US); BRADLEY, Ryan, Cypress Texas 77433 (US); SHULKA, Abhishek, Sugarland Texas 77498 (US)
(74) Representative: Potter, Julian Mark
(86) International application number: PCT/US2018/064540
(87) International publication number: WO 2019/113491

(56) References cited:
- GB-A- 2 027 473
- US-A- 4 007 705
- US-A- 4 205 694
- US-A- 4 677 998
- US-A- 4 716 271
- US-A- 4 880 335
- US-A- 5 052 423
- US-A- 5 069 234
- US-A- 5 097 780
- US-A- 5 265 634
- US-A- 5 770 800
- US-A1- 2008 038 990
- US-A1- 2012 211 233
- US-A1- 2016 059 939
- US-B1- 6 267 037
- US-B1- 7 656 997
- US-B2- 6 540 586
- DAN SCOVILLE: "Oceaneering Neptune Animation", YOUTUBE VIDEO, 13 October 2015 (2015-10-13), XP009520475, Retrieved from the Internet <URL:https://www.youtube.com/watch?v=dStsbHYHEMw>

## Description

### RELATION TO OTHER APPLICATIONS

This application claims priority through United States Provisional Application 62/596,808 filed on December 9, 2017.

### BACKGROUND

Pipelines are heavily used in the oil and gas industry for moving petroleum products from one location to another. Since much of the oil and gas industries products are harvested from offshore fields, there are a large number of pipelines installed on the seabed. Other subsea pipelines are stretched between subsea infrastructure and topside production and offloading facilities on the surface.

Pipelines come in two different broad categories, rigid pipelines and flexible pipelines. Flexible pipelines have the benefits over rigid pipelines and are typically constructed of several different layers, each having a specific task which may vary depending on specific specifications require by each client application. Of particular importance to the life of a flexible riser is the area between the pressure sheath and the outer sheath. This area is called the annulus and it includes all the layers contained within this area. If the annulus becomes flooded with seawater, the tensile armor wires will corrode at an accelerated rate as compared to a riser with a non-flooded annuls. Corrosion of the armor wires can result in premature failure of the flexible riser. Annulus flooding can occur do to several different external conditions such as mechanical damage to the riser or leaking end connectors.

Since a flooded annulus can reduce the life of the riser, it is important for the owners of the flexible risers to understand if their risers are flooded or not. On risers that are made without insulation, testing for flooded or non-flooded condition is accomplished using ultrasonic testing which involves projecting sound waves into the into the riser using a ultrasonic probe and looking for the sound waves to penetrate through the layer of the annulus until it hits the armor wires and bounces back to the probe. If the annulus is not flooded the sound will not penetrate the small air spaces that are found between the layers of the flexible riser and, therefore, no sound will be returned from the armor wires. If the annulus is flooded, liquid will be trapped in the small spaced that are in between the riser layers and this liquid will allow the ultrasound to pass through the space between the layers and the armor wires and should be visible on an ultrasound scan.

However, risers made with insulation in them cannot have an ultrasound test performed because the sound waves cannot penetrate the insulation, typically because the insulation is normally made of syntactic foam.

Reference is made to US 5,069,234 A, which discloses an apparatus for the treatment of an exterior pipe surface includes one or more nozzles or other treating means which are carried by a frame. The frame can be mounted around the pipe to be treated and is capable of moving along the pipe surface in longitudinal direction thereof, due to the provision of travelling wheels. Disclosed are provisions for allowing the apparatus to keep itself in balance on the pipe during operation. Such provisions include detection means (e.g. a pendulum with sensors) for detecting undesired displacements of the frame in circumferential direction of the pipe, and control means (such as e.g. hydraulic cylinders with a common system of hydraulic lines and valves) for adjusting the wheel axes of one or more travelling wheels in angular position, in response to a signal delivered by the detection means.

Reference is made to US 4,205.694 A, which discloses a cage mountable on a pipe line and bearing a carriage movable on the cage around the pipe line. The carriage supports an elongate arm to lie in the longitudinal direction of the pipe and has a jet cleaning head reciprocable along the arm to clean the exterior of the pipe line. The cage has driven rollers thereon to drive the cage along the pipe line; and an indexing mechanism is provided to step the carriage around the pipe line.

Reference is made to US 5,052,423 A, which discloses an apparatus for the hydrocleaning of the exterior surface of a pipeline or the like including a frame adapted to surround a portion of a pipeline and defining a longitudinal passage through which, in use, the pipeline extends. A plurality of liquid jet nozzles are mounted to the frame in spaced apart relation so as to surround, in use, said pipeline in circumferentially spaced apart relationship to one another with each nozzle in spaced relation to the pipeline exterior surface. Means for supplying high pressure liquid to the nozzles to cause liquid jets to be emitted from the nozzles are provided. The nozzles and the frame are adapted to move relative to the pipeline surface when in operation such that (i) the liquid jets from the nozzles impinge on the pipeline surface along prescribed paths located in an annular region extending around substantially the full circumferential extent of the pipeline and (ii) the annular region travels longitudinally relative to the pipeline to effect cleaning of the pipeline exterior surface. In one form of the machine the frame "opens" up to permit installation on an "in situ" pipeline.

Reference is made to US 5,097,780 A, which discloses a subsea inspection vehicle which is intended to be remotely operated comprising a substantially cylindrical pressure vessel (1). A pair of generally arcuate buoyancy tanks (8) and external equipment (3,7) are supported on the vessel (1) in a manner arranged such that the vessel remains substantially astable. A plurality of thrusters (16,18) are carried by the vessel (1) and are arranged to enable movement of the vessel (1) relative to all six degrees of freedom provided by its astable configuration. The vessel can be moved in any direction at any attitude of pitch, roll or yaw and can thereby emulate the flexibility of movement of a diver.

Reference is made to US 2016/059939 A1, which discloses a dual-mode crawler unit for traversing a generally tubular target, the unit comprising means for effecting a handover-hand action along the target and also means for effecting a driven action along the target, the unit comprising two or more traversing units, the units being directly connected to each other by one or more linear actuators.

Reference is made to GB 2027473 A, which discloses an apparatus for attachment to tubular or elongate structural members, notably for use in the cleaning, inspection, repair etc of the in supporting structures of offshore oil or gas platforms. The apparatus comprises a track unit adapted to embrace the structural member, this unit being articulated at one circumferential position and separable at another such position to enable it to be embraced about the structural member from a position laterally spaced therefrom. A carriage is arranged to traverse circumferentially around the closed track, carrying such cleaning, inspection, repair or the like equipment as is required.

Reference is made to US 4,716,271 A, which discloses an apparatus for circumferentially and longitudinally positioning a weld head or other tool with respect to the surface of a pipe. A first annular ring is affixed to the pipe. A longitudinally movable annular indexing track is also circumferentially fitted about the pipe and rides upon a plurality of support rods mounted to the indexing track. The support rods are slidably received within corresponding holes in the clamping ring and extend longitudinally and parallel to the outer surface of the pipe. A motor mounted to the fixed ring drives a ring gear concentric to the fixed ring to reciprocate a ball screw which moves the second longitudinally moveable ring toward and away from the fixed ring. An orbitally moveable third annular ring is circumferentially mounted to the second ring, and a second motor mounted to the fixed ring drives a telescoping drive shaft which rotates the orbital third ring. Thus, a weld head or other tool attached to the third ring is both longitudinally and circumferentially positionable with respect to the surface of the pipe.

Reference is made to US 4,677,998 A, which discloses an apparatus wherein bituminous and other coatings are removed from a pipe surface by directing powerful water jets, e.g. under a pressure of 300-600 bars, and preferably under an acute angle of incidence, against such pipe surface. The apparatus has one or more nozzles, each provided with water supply means, in a frame that can be mounted around the pipe to be treated. In a preferred embodiment, the nozzles are arranged in groups on rotatable annular discs which surround the pipe with some clearance and which receive a reciprocating rotary movement during operation, while the frame carrying such discs is adapted for travelling in longitudinal direction of the pipe. If both movements are coordinated, i.e. effected simultaneously, then each nozzle will follow a zigzag path along the pipe surface, thereby covering a vast area and removing bituminous or other coatings in a fast and efficient way.

Reference is made to US 5,265,634 A, which discloses an apparatus for the cleaning of the exterior surface of a pipeline or the like including a frame defining a longitudinal passage of a size sufficient to permit the pipeline to extend longitudinally therethrough. A first cleaning unit and a second cleaning unit are mounted on the frame. Each cleaning unit includes a plurality of jet modules. In turn, each jet module includes a rotatable jet nozzle mounted to deliver a jet of cleaning liquid toward the pipeline exterior surface. A high pressure cleaning liquid source is also provided and is connected to the rotatable jet nozzles to provide high pressure cleaning liquid to the nozzles.

Reference is made to US 6,267,037 B1, which discloses an underwater apparatus for servicing subsea pipelines provides a telescoping frame which can be lowered to the vicinity of the pipeline. The frame has an open section so that it can straddle the pipeline and outer jacket and fixate itself releasably so that it can be selectively repositioned. A cutting apparatus is secured to a telescoping sub frame. The cutting structure can be rotated about the longitudinal axis of the sub frame, as well as advanced along the direction of the longitudinal axis of the frame due to the telescoping feature of the sub frame. The cutting structure can also be moved pivotally about an axis of rotation which is outside and generally perpendicular to the longitudinal axis of the pipe. Thus, combining the telescoping feature with the pivoting feature and the feature of being able to rotate about the longitudinal axis, a variety of different cuts can be made. The principal advantage of the apparatus is to be able to cut through an outer jacket of a jacketed pipeline transversely and longitudinally to remove it in pieces without cutting through the pipeline.

Reference is made to US 4,007,705 A, which discloses as apparatus for temporary positioning about a cylindrical object such as an underwater pipeline or the like for mounting and indexing a tool across the surface of the pipeline for treating same.

### FIGURES

Various figures are included herein which illustrate aspects of embodiments of the disclosed inventions.
**Fig. 1** is a cutaway view in partial perspective of an exemplary flexible riser;
**Fig. 2** is a view in partial perspective of an exemplary tool disposed about and engaged against a tubular;
**Fig. 3** is a side view in partial perspective of an exemplary tool disposed about and engaged against a tubular;
**Fig. 4** is a view in partial perspective of an exemplary tool disposed about and engaged against a tubular and illustrating an inspection window;
**Fig. 5** is a view in partial perspective of an exemplary cutting path;
**Fig. 6** is a view in partial perspective of an exemplary slot inspection window cut into a tubular;
**Fig. 7** is a view in partial perspective of an exemplary plunge inspection window cut into a tubular; and
**Fig. 8** is a schematic view of a concave cutting bit disposed at least partially in a cutting bit holder.

### DESCRIPTION OF EXEMPLARY EMBODIMENTS

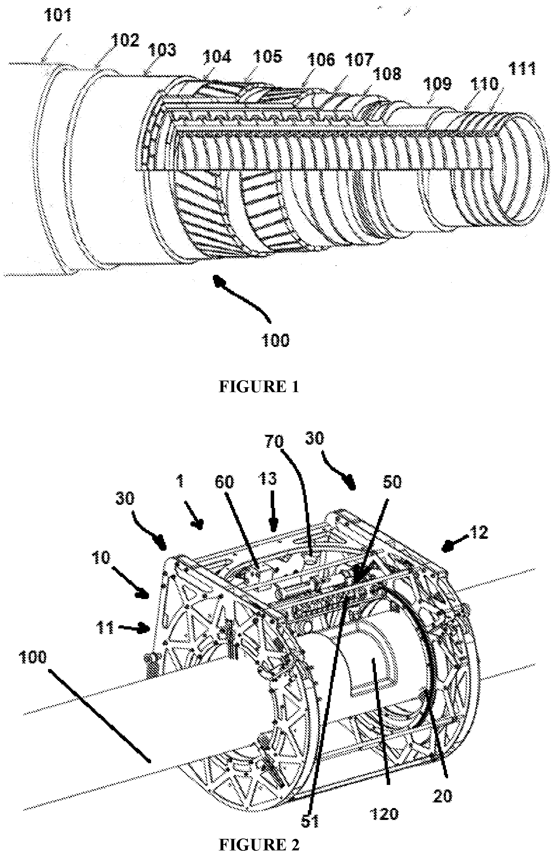

Referring to **Fig. 1****,** a tubular such as a flexible riser typically comprises outer sheath 101, insulation layer 102, inner sheath 103, first tape layer 104, outer tensile armor layer 105, inner tensile armor 106, second tape layer 107, pressure armor 108, pressure sheath 109, third tape layer 110, and carcass 111.

In a first embodiment, referring generally to **Figs. 1** and **2****,** tool 1 comprises frame 10 adapted to be secured about outer jacket 101 disposed about an outer portion of a tubular 100, frame 10 comprising first side 11; first clamp 30 disposed proximate first side 11; one or more cutting assemblies 20 movably disposed within frame 10; one or more cutter assembly positioners 50 operatively in communication with cutting assemblies 20, each cutter assembly positioner 50 typically operative to move one of the cutting assemblies 20 along a predetermined axis of cutter assembly positioner 50; one or more control interfaces 60 operatively in communication with clamp arm actuators 40 and cutting assemblies 20; and one or more power interfaces 70 operatively in communication with control interfaces 60, cutting assemblies 20, cutter assembly positioners 50, and first clamp 30. In configurations, tool 1 is adapted to be deployed by a diver or by a subsea device such as a remotely operated vehicle (ROV) or an autonomous vehicle.

First clamp 30 comprises a plurality of clamp arms 31,32, which further comprise and define an arcuate inner surface adapted to removably accept tubular 100 within a void defined by the arcuate inner surfaces, and one or more clamp arm actuators 40 operatively in communication with the plurality of clamp arms 31,32. First clamp 30 may be a mechanically operated clamp, a magnetic clamp, an electromagnetic clamp, or the like, or a combination thereof.

Actuators 40 are typically motors or cylinders that mechanically move clamping arms 31,32 to grasp tubular 100. If used, a motor turns cutter 22 at a rate that is matched to the materials that make up tubular 100. This allows for a smooth cut of the outer layers of tubular 100. The motor can be coupled to cutter 22 by direct drive, belt, chain or gears.

In most embodiments, frame 10 further comprises second side 12 disposed at a distance opposite first side 11 and third side 13 disposed intermediate first side 11 and second side 12. In these embodiments, second clamp 30a, which is typically substantially identical to first clamp 30, is disposed proximate second side 12.

Each cutting assembly typically comprises one or more cutters 22 adapted to cut into outer portion 101 of tubular 100, such as by machining away a portion of outer jacket 101, to a depth that allows ultrasonic testing (UT) to penetrate through one or more non-cut layers (101-111) of tubular 100, typically at least outer sheath 101 and insulation layer 102, and enable an ultrasonic inspection of tubular 100 and one or more cutter positioners 21 operatively connected to cutters 22 and adapted to advance or retract cutter 22. Typically there is one cutter 22 and one cutter positioner 21. In certain contemplated embodiments, cutter 22 comprises a water jet head to give a smoother bottom of cut surface finish. Use of a water jet head may also provide added safety in cutting inspection window 120 as the water jetting will cut away the insulation material but will not easily cut the inner sheath of tubular 100 because of its elastomeric nature.

One or more cutter assembly positioners 50 typically comprise motor driven lead screw 51. In other embodiments, cutter 22 movements may be carried out and constrained by a rack and pinion type carriage along the length of tubular 100. The movement in the axial direction would be confined to a circumferential gear that keeps cutter 22 perpendicular to an outer diameter of tubular 100. In most embodiments, movements of cutter are typically controlled by an operator turning on hydraulic or electrical motors to move cutter 22 as constrained by the mechanical gears of tool 1.

In certain embodiments, tool 1 further comprises one or more position sensors 23 operatively in communication with a predefined set of cutter assembly positioners 50.

**In the operation of exemplary methods,** referring back to **Fig. 1****,** cutting into tubular 100 and machining away a predetermined portion of an outer portion of tubular 100, e.g. a subset of layers 101-111, to a depth that allows for ultrasonic testing to penetrate through the remaining layers of tubular 100, by way of example and not limitation to enable an ultrasonic inspection of tubular 100 which may be a riser, uses tool 1, as described above, may be effected by positioning tool 1 on and securing tool 1 to tubular 100 at a predetermined position, such as by a diver subsea or a subsea vehicle subsea. This positioning and securing is typically effected by mechanically moving one or more clamping arms 31,32 to grasp tubular 100 and snug tool 1 to tubular 100. Mechanically moving the plurality of clamping arms 31,32 is typically accomplished by energizing a motor or a hydraulic cylinder operatively in communication with the plurality of clamping arms 31,32.

Power interface 70 is operatively connected to a power source and, once disposed proximate the predetermined position, first clamp 30, and second clamp 30a if present, used to secure tool 1 in place about tubular 100 at the predetermined position. In certain embodiments, tool 1 is operatively connected to a topside vessel (not shown in the figures) using an umbilical (not shown in the figures) that provides electrical power and digital communications between the topside vessel and tool 1. In these embodiments, tool 1 is typically positioned by a subsea vehicle subsea (not shown in the figures) and operatively connected to the topside vessel using the umbilical that provides electrical power and digital communications between the topside vessel and tool 1.

After tool 1 is secured, cutter assembly positioner 50 is used to position cutter 22 proximate an area that will be machined on an outer circumference of tubular 100, e.g. near window 120. Cutting assembly 20 is controlled to zero cutting assembly 20 on outer sheath 101 of tubular 100 such as by using control interface 60. Zeroing cutting assembly 20 on the outer sheath of tubular 100 may comprise monitoring the depth in real time using data from position sensor 23. Zeroing cutting assembly 20 is typically performed to allow a precise depth of a cut to be made into the outer sheath of tubular 100. That depth is typically sufficient to allow an ultrasonic signal to penetrate through to an inner sheath of tubular 100 and into a tensile armor wire layer when tubular 100 is flooded.

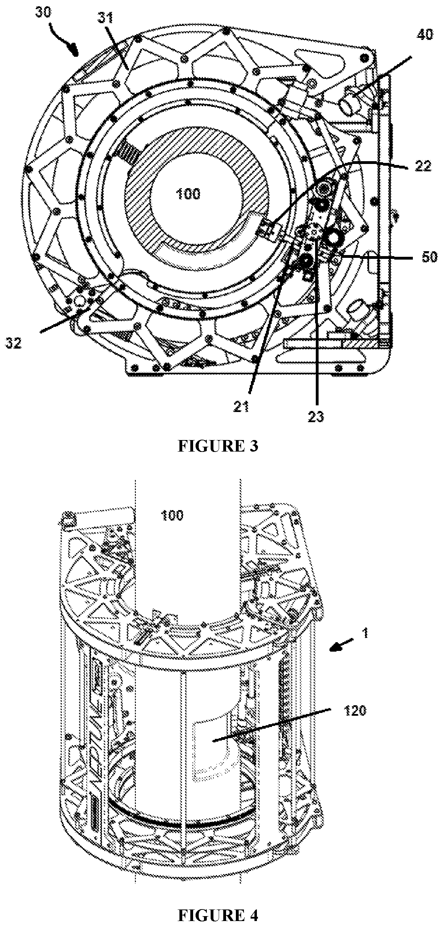

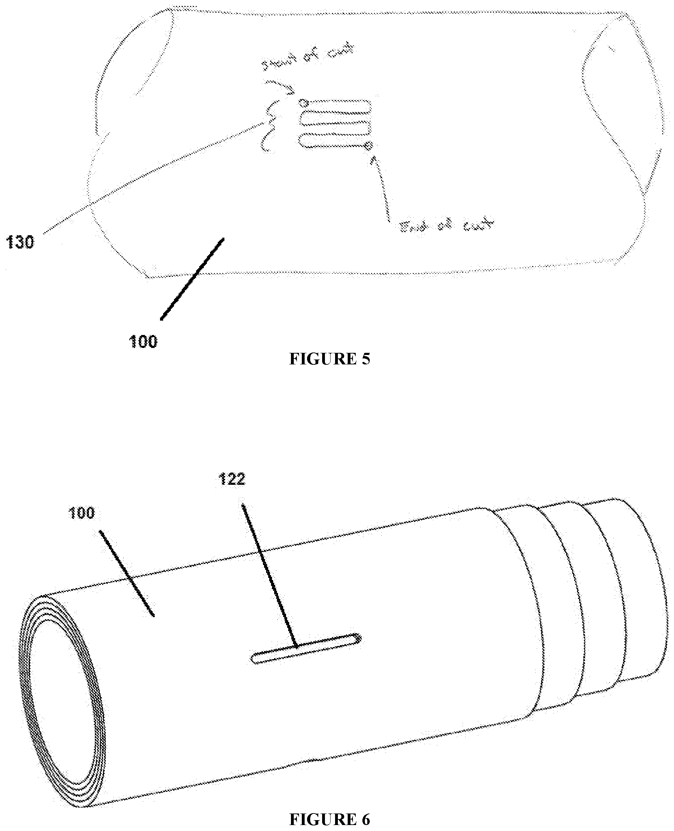

Once cutting location is known, programmed tool path 130 **(****Fig. 6****)** setup on control interface 60 where programmed tool path 130 is adapted to cause cutter assembly positioner 50 to make cutter 22 follow a precise cutting path to make inspection window 120 **(****Fig. 4****)** through one or more outer layers 101-111 of tubular 100 and inspection window 120 cut or otherwise machined out of tubular 100 to a depth sufficient to allow an ultrasonic signal to penetrate through to an inner sheath of tubular 100 without causing damage to the inner sheath itself. Typically, a bottom of the cut is sufficiently smooth so the ultrasonic signal is not reflected in an unanticipated direction when making an inspection and therefore not consistently returning to an ultrasonic test probe.

Controlling cutting assembly 20 may be accomplished by an operator sitting on a topside vessel by remotely controlling tool 1 using a software control program. In other embodiments, controlling cutting assembly 20 may be accomplished autonomously using position sensor 23 such as by an autonomous underwater vehicle (AUV) or remotely operated subsea vehicle (ROV).

After cutting inspection window 120, a verification of the size and cut depth can be accomplished using cameras mounted on tool 1. These cameras can be augmented by sonar, laser or photometric systems for making precise subsea measurements of the window depth and size.

After inspection window 120 is cut and the verification is made, tool 1 is typically removed and an inspection tool can be used to perform the flooded/non-flooded annulus test and armor wire thickness tests. In another embodiment, an inspection tool and tool 1 can be combined into a single tool. This can be used shorten the overall inspection time by eliminating the need to swap tools during an offshore inspection operation. Depending on the water depth where the inspection must take place, having a single tool could save considerable time and money for the operator.

In addition, clamp can be put on tubular 100 after the inspection is complete to re-enforce the area where inspection window 120 was cut and protect tubular 100 from any external damages or seawater ingress in this area.

Referring now to **Figs. 6-8****,** in some cases, depending on the inspection requirements of a specific application, it will not be necessary to open up a large inspection window 120. In these cases a single pass of cutter 22 maybe all that is needed for a sufficient sized inspection window 120 to detect flooded/non-flooded annulus and inspect for armor wire thickness. **Fig. 6** illustrates an example of a slot inspection window 122. In this case the cutting head would be plunged to the appropriate depth in the outer layers of tubular 100 and then a single longitudinal cut can be made by the topside operator to open slot inspection window 122. As with other embodiments, cutter 22 can be controlled with a hydraulic or electrical motor turning a rack and pinion type drive gear, or it can be driven by a linear actuator or hydraulic cylinder thereby simplifying the tool and control system.

In its simplest form the cutting motions could be provided by an underwater vehicle such as an AUV or ROV or divers by moving mechanical handles that move cutter 22 along a constrained tool path. In this case there would be no need for rack and pinion type gears, a drive motor, linear actuators, or hydraulic cylinders to move cutter 22 in an axial or longitudinal direction.

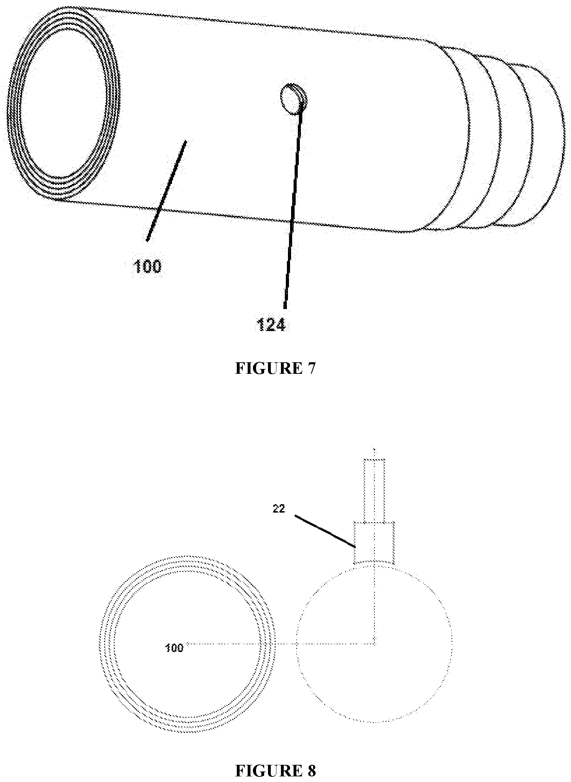

Additionally, referring to **Fig. 7****,** an inspection scenario may only require a single plunge of cutter 22 to open inspection window 120 large enough to check for flooded/non-flooded and annulus testing. In this scenario, an operator may position cutter 22 on tubular 100 in an appropriate position. Positioning of cutter 22 could be as described above or it could be solely only by positioning tool 1 on tubular 100 in the appropriate location. Divers or an underwater vehicle can be used to mechanically move cutter 22 and plunge it into outer layers of tubular 100. In this case, inspection window 120 would be plunge inspection window 124 and cutter 22 would typically comprise a cutting bit such as via a tool holder which can allow the cutting bit to be changed out prior to or during the job to suit the requirements of the inspection. The cutting bit used typically comprises a concave cutting face that is matched to an outer diameter of tubular 100 at the full depth of the cut.

By way of example and not limitation, if the full depth of the cut was to through outer surface 101 to inner sheath 103, the tool bit cutting face would have a concave shape on it with a built in diameter equal to that of the outer diameter of inner sheath 103. This will give the bottom of the cut a radial shape that is beneficial to the inspection technique. **Fig. 8** illustrates a cutting bit with an included concave diameter equal to that of inner sheath 103 of tubular 100.

The foregoing disclosure and description of the inventions are illustrative and explanatory. Various changes in the size, shape, and materials, as well as in the details of the illustrative construction and/or an illustrative method may be made without departing from the scope of the appended claims.

## Claims

1. A tool (1), comprising:
a. a frame (10) adapted to be secured about a plurality of outer layers disposed about an outer surface of a tubular (100), the outer layers comprising an outer jacket (101), the frame comprising a first side (11);
b. a first clamp (30) disposed proximate the first side (11), comprising:
i. a plurality of clamp arms (31,32), the plurality of clamp arms comprising and defining an arcuate inner surface adapted to removably accept a tubular within a void defined by the arcuate inner surfaces; and
ii. a clamp arm actuator (40) operatively in communication with the plurality of clamp arms;
c. a cutting assembly (20) movably disposed within the frame, the cutting assembly comprising:
i. a cutter (22) adapted to cut into one or more of the plurality of outer layers (101-111) of the tubular to a predetermined depth at which an ultrasonic testing (UT) tool can use ultrasonic waves to penetrate through non-cut layers of the plurality of outer layers; and
ii. a cutter positioner (21) operatively connected to the cutter and adapted to advance the cutter into or retract the cutter from the one or more of the plurality of outer layers of the tubular;
d. a cutter assembly positioner (50) operatively in communication with the cutting assembly, the cutter positioner operative to move the cutting assembly along a predetermined axis of the cutter assembly positioner (50);
e. a control interface (60) operatively in communication with the clamp arm actuator (40) and the cutting assembly (20), wherein the cutting assembly (20) is remotely controllable by an operator using a software control program or operable autonomously using a position sensor (23); and
f. a power interface (70) operatively in communication with a power source, the control interface, the cutting assembly, the cutter positioner, and the first clamp.

2. The tool of Claim 1, wherein the tool comprises a mechanical handle dimensioned to be moveable by a diver or by a subsea device; and, optionally,
wherein the subsea device comprises a remotely operated vehicle or autonomous vehicle.

3. The tool of Claim 1 wherein the first clamp comprises a mechanically operated clamp, a magnetic clamp, or an electromagnetic clamp.

4. The tool of Claim 1 wherein the cutter is further adapted to either machine away a portion of the outer jacket or remove the portion of the outer jacket by fluid pressure.

5. The tool of Claim 1 wherein the frame further comprises:
a. a second side (12) axially disposed at a distance opposite the first side along a longitudinal axis defined by a length of a tubular (100) about which the frame is disposed;
b. a third side (13) disposed intermediate the first side (11) and the second side (12); and
c. a second clamp, substantially identical to the first clamp and disposed proximate the second side.

6. The tool of Claim 1 wherein the cutter assembly positioner (50) comprises a motor driven lead screw (51) or a rack and pinion type carriage disposed along a longitudinal axis defined by a length of a tubular (100) about which the frame is disposed and operatively in communication with the cutter and configured to constrain movement of the cutter along the length of the tubular.

7. The tool of Claim 1 further comprising a position sensor (23) operatively in communication with the cutter positioner.

8. A method of cutting into a tubular, the tubular comprising a plurality of outer layers, the plurality of outer layers comprising an outer jacket (101), and machining away a predetermined portion of an outer surface of the tubular to a depth that allows ultrasonic testing to penetrate through the remaining layers of the plurality of outer layers of the tubular and enable an ultrasonic inspection of the riser using a tool (1) comprising a frame (10) adapted to be secured about the outer surface, the frame comprising a first side (11); a first clamp (30) disposed proximate the first side (11), comprising a plurality of clamp arms (31,32), the plurality of clamp arms comprising and defining an arcuate inner surface adapted to removably accept a tubular within a void defined by the arcuate inner surfaces and a clamp arm actuator (40) operatively in communication with the plurality of clamp arms; a cutting assembly (20) movably disposed within the frame, the cutting assembly comprising a cutter (22) adapted to cut into one or more of the plurality of outer layers (101-111) of the tubular to a depth at which an ultrasonic inspection of the tubular may occur using an ultrasonic testing (UT) tool which can use ultrasonic waves to penetrate through non-cut layers of the plurality of outer layers and a cutter positioner (21) operatively connected to the cutter and adapted to advance the cutter into or retract the cutter from the plurality of outer layers; a cutter assembly positioner (50) operatively in communication with the cutting assembly, the cutter positioner operative to move the cutting assembly along a predetermined axis of the cutter assembly positioner (50); a control interface (60) operatively in communication with the clamp arm actuator (40) and the cutting assembly (20), wherein the cutting assembly (20) is remotely controllable by an operator using a software control program or operable autonomously using a position sensor (23); and a power interface (70) operatively in communication with a power source, the control interface, the cutting assembly, the cutter positioner, and the first clamp, the method comprising:
a. positioning the tool on the tubular at a predetermined position;
b. operatively connecting the power interface to the power source;
c. once disposed proximate the predetermined position, using the first clamp to secure the tool in place about the tubular at the predetermined position;
d. after the tool is securely put in place, moving the cutter head by use of the cutter positioner to the area that will be machined on an outer circumference of the tubular;
e. controlling the cutting assembly to zero the cutting assembly on an outer sheath of the tubular;
f. once the cutting location is known, setting up a programmed tool path on the controller, the programmed tool path adapted to cause the cutter assembly positioner to make the cutting assembly follow a precise cutting path to make an inspection window in the outer layer of the tubular; and
g. cutting the inspection window out of the tubular to a depth sufficient to allow an ultrasonic signal to penetrate through to a non-cut layer of the plurality of layers of the tubular, the non-cut layer of the plurality of layers comprising an inner sheath, without causing damage to the inner sheath itself, a bottom of the cut being smooth so the ultrasonic signal is not reflected in an unanticipated direction when making an inspection and the reflected signal therefore consistently returns to an ultrasonic test probe.

9. The method of Claim 8, wherein the tool is positioned by:
a. a diver subsea; or
b. a subsea vehicle subsea.

10. The method of Claim 8, wherein the tool is operatively connected to a topside vessel using an umbilical that provides electrical power and digital communications between the topside vessel and the tool.

11. The method of Claim 10, wherein the tool is positioned by a subsea vehicle subsea.

12. The method of Claim 10, wherein controlling the cutting assembly is accomplished by an operator present on the topside vessel by remotely controlling the tool using the software control program.

13. The method of Claim 8 wherein zeroing the cutting assembly on the outer sheath of the tubular further comprises monitoring the depth in real time using data from the position sensor.

14. The method of Claim 8, wherein controlling the cutting assembly is accomplished autonomously using the position sensor by an autonomous underwater vehicle (AUV) or remotely operated subsea vehicle (ROV).

15. The method of Claim 8, wherein zeroing the cutting assembly on the outer sheath of the tubular is performed to allow a precise depth of a cut to be made into the outer sheath of the tubular; and, optionally,
wherein the precise depth is further sufficient to allow the ultrasonic signal to penetrate through to an inner sheath of the tubular and into a tensile armor wire layer when the tubular is flooded.

16. The method of Claim 8, wherein the tool is placed about the tubular at the predetermined position by mechanically moving the plurality of clamping arms to grasp the tubular; and, optionally,
wherein mechanically moving the plurality of clamping arms is accomplished by energizing a motor or a hydraulic cylinder operatively in communication with the plurality of clamping arms.

## Patentansprüche

1. Werkzeug (1), umfassend:
a. einen Rahmen (10), der dazu angepasst ist, um eine Vielzahl von um eine äußere Oberfläche eines Rohrs (100) angeordneten äußeren Schichten fixiert zu werden, wobei die äußeren Schichten einen äußeren Mantel (101) umfassen und der Rahmen eine erste Seite (11) umfasst;
b. eine erste Klemme (30), die nah bei der ersten Seite (11) angeordnet ist, umfassend:
i. eine Vielzahl von Klemmarmen (31, 32), wobei die Vielzahl von Klemmarmen eine bogenförmige innere Oberfläche umfasst und definiert, die dazu angepasst ist, ein Rohr in einem durch die bogenförmigen inneren Oberflächen definierten Hohlraum entfernbar aufzunehmen; und
ii. einen Klemmarmaktor (40) in Wirkverbindung mit der Vielzahl von Klemmarmen;
c. eine Schneidanordnung (20), die innerhalb des Rahmens bewegbar angeordnet ist, wobei die Schneidanordnung Folgendes umfasst:
i. eine Schneidvorrichtung (22), die dazu angepasst ist, in eine oder mehrere der Vielzahl von äußeren Schichten (101-111) des Rohrs bis auf eine vorgegebene Tiefe zu schneiden, in der ein Ultraschallprüfwerkzeug (UT-Werkzeug) Ultraschallwellen verwenden kann, um nicht geschnittene Schichten der Vielzahl von äußeren Schichten zu durchdringen; und
ii. eine Schneidvorrichtungs-Positioniervorrichtung (21), die wirksam mit der Schneidvorrichtung verbunden ist und dazu angepasst ist, die Schneidvorrichtung in die eine oder die mehreren der Vielzahl von äußeren Schichten des Rohrs vorzurücken oder davon zurückzuziehen;
d. eine Schneidanordnungs-Positioniervorrichtung (50) in Wirkverbindung mit der Schneidanordnung, wobei die Schneidvorrichtungs-Positioniervorrichtung wirksam ist, um die Schneidanordnung entlang einer vorgegebenen Achse der Schneidanordnungs-Positioniervorrichtung (50) zu bewegen;
e. eine Steuerungsschnittstelle (60) in Wirkverbindung mit dem Klemmarmaktor (40) und der Schneidanordnung (20), wobei die Schneidanordnung (20) von einer Bedienperson unter Verwendung eines Softwaresteuerprogramms fernsteuerbar ist oder unter Verwendung eines Positionssensors (23) autonom betriebsfähig ist; und
f. eine Leistungsschnittstelle (70) in Wirkverbindung mit einer Leistungsquelle, der Steuerungsschnittstelle, der Schneidanordnung, der Schneidvorrichtungs-Positioniervorrichtung und der ersten Klemme.

2. Werkzeug nach Anspruch 1, wobei das Werkzeug einen mechanischen Griff umfasst, der dimensioniert ist, um durch einen Taucher oder eine Unterseevorrichtung bewegbar zu sein,
wobei die Unterseevorrichtung ein ferngesteuertes Fahrzeug oder ein autonomes Fahrzeug umfasst.

3. Werkzeug nach Anspruch 1, wobei die erste Klemme eine mechanisch betätigte Klemme, eine magnetische Klemme oder eine elektromagnetische Klemme umfasst.

4. Werkzeug nach Anspruch 1, wobei die Schneidvorrichtung ferner dazu angepasst ist, entweder einen Abschnitt des äußeren Mantels spanabhebend zu entfernen oder den Abschnitt des äußeren Mantels durch Fluiddruck zu entfernen.

5. Werkzeug nach Anspruch 1, wobei der Rahmen ferner Folgendes umfasst:
a. eine zweite Seite (12), die entlang einer von einem Längsstück eines Rohrs (100), um das der Rahmen angeordnet ist, definierten Längsachse axial in einem Abstand gegenüber von der ersten Seite angeordnet ist;
b. eine dritte Seite (13), die zwischen der ersten Seite (11) und der zweiten Seite (12) angeordnet ist; und
c. eine zweite Klemme, die im Wesentlichen mit der ersten Klemme identisch ist und nah bei der zweiten Seite angeordnet ist.

6. Werkzeug nach Anspruch 1, wobei die Schneidanordnungs-Positioniervorrichtung (50) eine motorisch angetriebene Gewindespindel (51) oder einen Schlitten mit Zahnstangengetriebe umfasst, die bzw. der entlang einer Längsachse angeordnet ist, die von einem Längsstück eines Rohrs (100) definiert ist, um das der Rahmen angeordnet ist, und mit der Schneidvorrichtung in Wirkverbindung steht und dazu konfiguriert ist, Bewegung der Schneidvorrichtung entlang der Länge des Rohrs einzuschränken.

7. Werkzeug nach Anspruch 1, ferner umfassend einen Positionssensor (23) in Wirkverbindung mit der Schneidvorrichtungs-Positionierungsvorrichtung.

8. Verfahren zum Schneiden in ein Rohr, wobei das Rohr eine Vielzahl von äußeren Schichten umfasst und die Vielzahl von äußeren Schichten einen äußeren Mantel (101) umfasst, und spanabhebenden Entfernen eines vorgegebenen Abschnitts einer äußeren Oberfläche des Rohrs bis auf eine Tiefe, die zulässt, dass eine Ultraschallprüfung die verbleibenden Schichten der Vielzahl von äußeren Schichten des Rohrs durchdringt und eine Ultraschallinspektion des Steigrohrs unter Verwendung eines Werkzeugs (1) ermöglicht, das Folgendes umfasst: einen Rahmen (10), der dazu angepasst ist, um die äußere Oberfläche fixiert zu werden, wobei der Rahmen eine erste Seite (11) umfasst; eine erste Klemme (30), die nah bei der ersten Seite (11) angeordnet ist, umfassend eine Vielzahl von Klemmarmen (31, 32), wobei die Vielzahl von Klemmarmen eine bogenförmige innere Oberfläche umfasst und definiert, die dazu angepasst ist, ein Rohr in einem durch die bogenförmigen inneren Oberflächen definierten Hohlraum entfernbar aufzunehmen, und einen Klemmarmaktor (40) in Wirkverbindung mit der Vielzahl von Klemmarmen; eine Schneidanordnung (20), die innerhalb des Rahmens bewegbar angeordnet ist, wobei die Schneidanordnung Folgendes umfasst: eine Schneidvorrichtung (22), die dazu angepasst ist, in eine oder mehrere der Vielzahl von äußeren Schichten (101-111) des Rohrs bis auf eine Tiefe zu schneiden, in der eine Ultraschallinspektion des Rohrs unter Verwendung eines Ultraschallprüfwerkzeugs (UT-Werkzeugs) stattfinden kann, das Ultraschallwellen verwenden kann, um nicht geschnittene Schichten der Vielzahl von äußeren Schichten zu durchdringen, und eine Schneidvorrichtungs-Positioniervorrichtung (21), die wirksam mit der Schneidvorrichtung verbunden ist und dazu angepasst ist, die Schneidvorrichtung in die Vielzahl von äußeren Schichten vorzurücken oder davon zurückzuziehen; eine Schneidanordnungs-Positioniervorrichtung (50) in Wirkverbindung mit der Schneidanordnung, wobei die Schneidvorrichtungs-Positioniervorrichtung wirksam ist, um die Schneidanordnung entlang einer vorgegebenen Achse der Schneidanordnungs-Positioniervorrichtung (50) zu bewegen; eine Steuerungsschnittstelle (60) in Wirkverbindung mit dem Klemmarmaktor (40) und der Schneidvorrichtung (20), wobei die Schneidanordnung (20) durch eine Bedienperson unter Verwendung eines Softwaresteuerprogramms fernsteuerbar oder unter Verwendung eines Positionssensors (23) autonom betriebsfähig ist; und eine Leistungsschnittstelle (70) in Wirkverbindung mit einer Leistungsquelle, der Steuerungsschnittstelle, der Schneidanordnung, der Schneidvorrichtungs-Positioniervorrichtung und der ersten Klemme, wobei das Verfahren Folgendes umfasst:
a. Positionieren des Werkzeugs auf dem Rohr an einer vorgegebenen Stelle;
b. wirksames Verbinden der Leistungsschnittstelle mit der Leistungsquelle;
c. wenn sie nah bei der vorgegebenen Stelle angeordnet ist, Verwenden der ersten Klemme, um das Werkzeug an der vorgegebenen Stelle um das Rohr in Position zu fixieren;
d. nachdem das Werkzeug fest in Position gebracht ist, Bewegen des Schneidkopfs durch Verwenden der Schneidvorrichtungs-Positioniervorrichtung in den Bereich auf einem Außenumfang des Rohrs, der spanabhebend bearbeitet werden wird;
e. Steuern der Schneidanordnung dazu, die Schneidanordnung auf einer äußeren Hülle des Rohrs zu nullen;
f. wenn der Schneidort bekannt ist, Einrichten eines programmierten Werkzeugpfads an der Steuerung, wobei der programmierte Werkzeugpfad dazu angepasst ist, zu bewirken, dass die Schneidanordnungs-Positioniervorrichtung die Schneidanordnung veranlasst, einem präzisen Schneidpfad zu folgen, um in der äußeren Schicht des Rohrs ein Inspektionsfenster zu erzeugen; und
g. Ausschneiden des Inspektionsfensters aus dem Rohr bis zu einer Tiefe, die ausreicht, um zuzulassen, dass ein Ultraschallsignal bis zu einer nicht geschnittenen Schicht der Vielzahl von Schichten des Rohrs dringt, wobei die nicht geschnittene Schicht der Vielzahl von Schichten eine innere Hülle umfasst, ohne Beschädigung der inneren Hülle selbst zu bewirken, wobei eine Sohle des Schnitts glatt ist, sodass das Ultraschallsignal nicht in einer unerwarteten Richtung reflektiert wird, wenn eine Inspektion vorgenommen wird, und das reflektierte Signal daher konsistent zu einer Ultraschallprüfsonde zurückkehrt.

9. Verfahren nach Anspruch 8, wobei das Werkzeug positioniert wird durch:
a. einen Taucher unter dem Meer; oder
b. ein Unterseefahrzeug unter dem Meer.

10. Verfahren nach Anspruch 8, wobei das Werkzeug wirksam mit einem Schiff an der Oberfläche verbunden ist, indem ein Versorgungskabel verwendet wird, das elektrische Leistung und digitale Kommunikation zwischen dem Schiff an der Oberfläche und dem Werkzeug bereitstellt.

11. Verfahren nach Anspruch 10, wobei das Werkzeug durch ein Unterseefahrzeug unter dem Meer positioniert wird.

12. Verfahren nach Anspruch 10, wobei das Steuern der Schneidanordnung durch eine auf dem Schiff an der Oberfläche anwesende Bedienperson durch Fernsteuern des Werkzeugs unter Verwendung des Softwaresteuerprogramms erreicht wird.

13. Verfahren nach Anspruch 8, wobei das Nullen der Schneidanordnung auf der äußeren Hülle des Rohrs ferner das Überwachen der Tiefe in Echtzeit unter Verwendung von Daten von dem Positionssensor umfasst.

14. Verfahren nach Anspruch 8, wobei das Steuern der Schneidanordnung unter Verwendung des Positionssensors durch ein autonomes Unterwasserfahrzeug (AUV) oder ein ferngesteuertes Unterseefahrzeug (ROV) autonom erreicht wird.

15. Verfahren nach Anspruch 8, wobei das Nullen der Schneidanordnung auf der äußeren Hülle des Rohrs durchgeführt wird, um zuzulassen, dass eine präzise Tiefe eines Schnitts in die äußere Hülle des Rohrs erzeugt werden kann; und wobei optional
die präzise Tiefe ferner ausreicht, um zuzulassen, dass das Ultraschallsignal bis zu einer inneren Hülle des Rohrs und in eine Zugdraht-Bewehrungsschicht dringt, wenn das Rohr geflutet ist.

16. Verfahren nach Anspruch 8, wobei das Werkzeug durch mechanisches Bewegen der Vielzahl von Klemmarmen, um das Rohr zu greifen, an der vorgegebenen Stelle um das Rohr platziert wird; und wobei optional
das mechanische Bewegen der Vielzahl von Klemmarmen durch Einschalten eines Motors oder eines Hydraulikzylinders in Wirkverbindung mit der Vielzahl von Klemmarmen erreicht wird.

## Revendications

1. Outil (1) comprenant :
a. un bâti (10) apte à être fixé autour d'une pluralité de couches extérieures disposées autour d'une surface extérieure d'un tube (100), les couches extérieures comprenant une gaine extérieure (101), le bâti comprenant un premier côté (11) ;
b. une première pince (30) disposée à proximité du premier côté (11), comprenant :
i. une pluralité de bras de serrage (31, 32), la pluralité de bras de serrage comprenant et définissant une surface intérieure courbe apte à recevoir de manière amovible un tube à l'intérieur d'un vide défini par les surfaces intérieures courbes ; et
ii. un actionneur de bras de serrage (40) en communication fonctionnelle avec la pluralité de bras de serrage ;
c. un ensemble de coupe (20) disposé de manière mobile à l'intérieur du bâti, l'ensemble de coupe comprenant :
i. un outil de coupe (22) apte à couper dans une ou plusieurs de la pluralité de couches extérieures (101-111) du tube à une profondeur prédéterminée à laquelle un outil de test aux ultrasons (UT) peut utiliser des ondes ultrasonores pour pénétrer à travers des couches non coupées de la pluralité de couches extérieures ; et
ii. un positionneur d'outil de coupe (21) relié fonctionnellement à l'outil de coupe et apte à avancer l'outil de coupe dans ou reculer l'outil de coupe de l'une ou plusieurs de la pluralité de couches extérieures du tube ;
d. un positionneur d'ensemble de coupe (50) en communication fonctionnelle avec l'ensemble de coupe, le positionneur d'outil de coupe servant à déplacer l'ensemble de coupe le long d'un axe prédéterminé du positionneur d'ensemble de coupe (50) ;
e. une interface de commande (60) en communication fonctionnelle avec l'actionneur de bras de serrage (40) et l'ensemble de coupe (20), l'ensemble de coupe (20) pouvant être télécommandé par un opérateur utilisant un logiciel de commande ou pouvant fonctionner de manière autonome en utilisant un capteur de position (23) ; et
f. une interface de puissance (70) en communication fonctionnelle avec une source de puissance, l'interface de commande, l'ensemble de coupe, le positionneur d'outil de coupe et la première pince.

2. Outil de la revendication 1, dans lequel l'outil comprend une poignée mécanique dimensionnée pour pouvoir être déplacée par un plongeur ou un dispositif sous-marin, et éventuellement
dans lequel le dispositif sous-marin comprend un véhicule télécommandé ou un véhicule autonome.

3. Outil de la revendication 1, dans lequel la première pince comprend une pince à commande mécanique, une pince magnétique ou une pince électromagnétique.

4. Outil de la revendication 1, dans lequel l'outil de coupe est en sus apte à usiner une partie de la gaine extérieure ou retirer la partie de la gaine extérieure par pression de fluide.

5. Outil de la revendication 1, dans lequel le bâti comprend en sus :
a. un deuxième côté (12) disposé axialement à une distance opposée au premier côté le long d'un axe longitudinal défini par une longueur d'un tube (100) autour duquel le bâti est disposé ;
b. un troisième côté (13) disposé entre le premier côté (11) et le deuxième côté (12) ; et
c. une deuxième pince, sensiblement identique à la première pince et disposée à proximité du deuxième côté.

6. Outil de la revendication 1, dans lequel le positionneur d'ensemble de coupe (50) comprend une vis-mère motorisée (51) ou un chariot de type crémaillère disposé le long d'un axe longitudinal défini par une longueur d'un tube (100) autour duquel le bâti est disposé et en communication fonctionnelle avec l'outil de coupe et configuré pour contraindre le mouvement de l'outil de coupe sur la longueur du tube.

7. Outil de la revendication 1, comprenant en sus un capteur de position (23) en communication fonctionnelle avec le positionneur d'outil de coupe.

8. Procédé de coupe dans un tube, le tube comprenant une pluralité de couches extérieures, la pluralité de couches extérieures comprenant une gaine extérieure (101), et d'usinage d'une partie prédéterminée d'une surface extérieure du tube jusqu'à une profondeur qui permet à un test aux ultrasons de pénétrer à travers les couches restantes de la pluralité de couches extérieures du tube et de permettre une inspection aux ultrasons de la colonne montante en utilisant un outil (1) comprenant un bâti (10) apte à être fixé autour de la surface extérieure, le bâti comprenant un premier côté (11) ; une première pince (30) disposée à proximité du premier côté (11), comprenant une pluralité de bras de serrage (31, 32), la pluralité de bras de serrage comprenant et définissant une surface intérieure courbe apte à recevoir de manière amovible un tube à l'intérieur d'un vide défini par les surfaces intérieures courbes et un actionneur de bras de serrage (40) en communication fonctionnelle avec la pluralité de bras de serrage ; un ensemble de coupe (20) disposé de manière mobile à l'intérieur du bâti, l'ensemble de coupe comprenant un outil de coupe (22) apte à couper dans une ou plusieurs de la pluralité de couches extérieures (101-111) du tube à une profondeur à laquelle une inspection aux ultrasons du tube peut être réalisée à l'aide d'un outil de test aux ultrasons (UT) qui peut utiliser des ondes ultrasonores pour pénétrer à travers des couches non coupées de la pluralité de couches extérieures et un positionneur d'outil de coupe (21) relié fonctionnellement à l'outil de coupe et apte à avancer l'outil de coupe dans ou rétracter l'outil de coupe de la pluralité de couches extérieures ; un positionneur d'ensemble de coupe (50) en communication fonctionnelle avec l'ensemble de coupe, le positionneur d'outil de coupe servant à déplacer l'ensemble de coupe le long d'un axe prédéterminé du positionneur d'ensemble de coupe (50) ; une interface de commande (60) en communication fonctionnelle avec l'actionneur de bras de serrage (40) et l'ensemble de coupe (20), l'ensemble de coupe (20) pouvant être télécommandé par un opérateur utilisant un logiciel de commande ou pouvant fonctionner de manière autonome en utilisant un capteur de position (23) ; et une interface de puissance (70) en communication fonctionnelle avec une source de puissance, l'interface de commande, l'ensemble de coupe, le positionneur d'outil de coupe et la première pince, le procédé comprenant les étapes consistant à :
a. positionner l'outil sur le tube à une position prédéterminée ;
b. relier fonctionnellement l'interface de puissance à la source de puissance ;
c. une fois disposée à proximité de la position prédéterminée, utiliser la première pince pour fixer l'outil en place autour du tube à la position prédéterminée ;
d. une fois l'outil fixé en place, déplacer la tête d'outil de coupe en utilisant le positionneur d'outil de coupe à la zone qui sera usinée sur une circonférence extérieure du tube ;
e. commander l'ensemble de coupe pour mettre à zéro l'ensemble de coupe sur une gaine extérieure du tube ;
f. une fois l'emplacement de coupe connu, paramétrer une trajectoire d'outil programmée sur le dispositif de commande, le trajectoire d'outil programmé étant apte à amener le positionneur d'ensemble de coupe à faire suivre une trajectoire de coupe précise par l'ensemble de coupe afin de former une fenêtre d'inspection dans la couche extérieure du tube ; et
g. couper la fenêtre d'inspection sur le tube à une profondeur suffisante pour permettre à un signal ultrasonore de pénétrer jusqu'à une couche non coupée de la pluralité de couches du tube, la couche non coupée de la pluralité de couches comprenant une gaine intérieure, sans causer de dommage à la gaine intérieure elle-même, un fond de la coupe étant lisse de manière à ce que le signal ultrasonore n'est pas réfléchi dans une direction inattendue quand on procède à une inspection et que le signal réfléchi retourne ainsi invariablement à une sonde de test aux ultrasons.

9. Procédé de la revendication 8, dans lequel l'outil est positionné par :
a. un plongeur sous-marin ; ou
b. un véhicule sous-marin en plongée.

10. Procédé de la revendication 8, dans lequel l'outil est relié fonctionnellement à un navire en surface à l'aide d'un câble ombilical qui fournit l'alimentation électrique et les communications numériques entre le navire en surface et l'outil.

11. Procédé de la revendication 10, dans lequel l'outil est positionné par un véhicule sous-marin en plongée.

12. Procédé de la revendication 10, dans lequel la commande de l'ensemble de coupe est effectuée par un opérateur présent dans le navire en surface en télécommandant l'outil avec le logiciel de commande.

13. Procédé de la revendication 8, dans lequel la mise à zéro de l'ensemble de coupe sur la gaine extérieure du tube comprend en sus la surveillance de la profondeur en temps réel par des données venant du capteur de position.

14. Procédé de la revendication 8, dans lequel la commande de l'ensemble de couple est effectuée de manière autonome avec le capteur de position par un véhicule sous-marin autonome (AUV) ou par un véhicule sous-marin télécommandé (ROV).

15. Procédé de la revendication 8, dans lequel la mise à zéro de l'ensemble de coupe sur la gaine extérieure du tube se fait de manière à permettre d'obtenir une profondeur précise d'une coupe dans la gaine extérieure du tube, et, éventuellement,
dans lequel la profondeur précise est en sus suffisante pour permettre au signal ultrasonore de pénétrer à travers une gaine intérieure du tube et dans une couche de fil armé tensile quand le tube est noyé.

16. Procédé de la revendication 8, dans lequel l'outil est placé autour du tube à la position prédéterminée par le déplacement mécanique de la pluralité de bras de serrage pour serrer le tube ; et, éventuellement,
dans lequel le déplacement mécanique de la pluralité de bras de serrage se fait en mettant en marche un moteur ou un cylindre hydraulique en communication fonctionnelle avec la pluralité de bras de serrage.
